Europäisches Patentamt

European Patent Office

Office européen des brevets

(11) Publication number: 0 385 731 A1

# EUROPEAN PATENT APPLICATION

(21) Application number: 90302088.1

(22) Date of filing: 27.02.90

(51) Int. Cl.5: **F16L 11/127**

(30) Priority: 01.03.89 JP 49526/89

(43) Date of publication of application:
05.09.90 Bulletin 90/36

(84) Designated Contracting States:
AT BE CH DE DK ES FR GB GR IT LI LU NL SE

(71) Applicant: JAPAN GORE-TEX, INC.
42-5, 1-chome Akazutsumi
Setagaya-ku Tokyo 156(JP)

(72) Inventor: Shimoda, Eiji
17-24, 3-Chome Naka-Cho,
Musashino-Shi, Tokyo-To 180(JP)
Inventor: Motada, Akihiro
309-1, Nakai,
Okayama-Shi, Okayama-Ken 703(JP)

(74) Representative: McCallum, William Potter et al
Cruikshank & Fairweather 19 Royal
Exchange Square
Glasgow G1 3AE Scotland(GB)

(54) Conductive composite plastics tube.

(57) A composite plastics tube is described in which an electrically conductive layer (1) consisting of a plastics material containing a conductive filler is surrounded by an insulating layer (2) of plastics material.

EP 0 385 731 A1

The invention relates to a composite plastics tube.

Tubes have an internal passage through which different substances can be transported, and may be made from a variety of materials, such as metals, ceramics and synthetic resins, depending on the desired properties and functions of the tube itself and the physical properties of the substances to be transported.

For some uses, problems arise in that liquids flowing through the internal passage freeze or that transport becomes impossible because of increased viscosity even if freezing does not occur. In these cases it is necessary to heat substances in the tube efficiently during transport. The invention is concerned with providing a plastics tube which enables this to be done in a simple and efficient manner.

According to the invention there is provided a composite plastics tube composed of at least two different materials, characterized in that one of the materials is a plastics material containing an electrically conductive filler.

The filler renders the material electrically conductive so that the tube and its contents can be heated by passing an electric current through the said material of the tube.

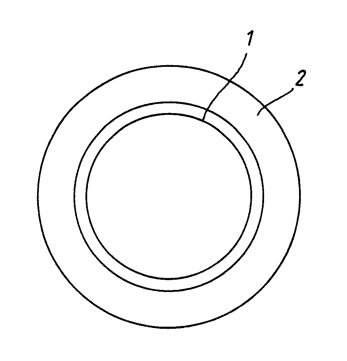

A preferred embodiment of the tube in accordance with the invention will now be described, by way of example, with reference to the sole Figure of the accompanying drawing which shows a cross-section of the tube.

The tube shown is of circular cross-section and comprises two different layers, an inner conductive layer 1 of electrothermic material and an outer insulating layer 2. In this embodiment the conductive inner layer 1 is made of a porous body of ethylene tetrafluoride resin containing carbon black in an amount of 80% by weight, and the insulating outer layer 2 is a porous material consisting of ethylene tetrafluoride resin.

A tube with this structure is suitable for transporting all types of medicinal products, and if it includes an innermost layer of a copolymer of ethylene tetrafluoride and perfluoroalkylvinyl ether it will have good chemical resistance.

The tube can be used for electrothermic maintenance of temperature and heating liquids that are being transported, by passage of a suitable electric current through the conductive layer 1. In addition, such temperature maintenance and heating can be carried out safely and economically as a result of the adiabatic and electrical insulating effects of the porous body of ethylene tetrafluoride resin forming the outermost layer 2. By this means, freezing or unacceptable increases in the viscosity of transported liquids can be prevented. Furthermore, because the resin used in forming the tube is of extremely high flame-resistance and heat resistance, temperature maintenance and heating can be carried out at temperatures close to 200°C.

A tube as described above can be manufactured by extrusion, using two extruding machines. One extruding machine is used for ethylene tetrafluoride resin containing carbon black, and the other extruding machine is used for ethylene tetrafluoride resin alone. Paste extrusion moulding of these materials is then performed simultaneously using suitable auxiliary agents and a suitable die to obtain a composite, circular section tube with a two-layer structure in which the ethylene tetrafluoride resin containing carbon black forms the inside layer. The auxiliary agents for facilitating the paste extrusion moulding are subsequently removed from the tube by heating.

## Claims

1. A composite plastics tube composed of at least two different materials, characterized in that one of the materials (1) is a plastics material containing an electrically conductive filler.

2. A composite tube according to claim 1, in which the different materials (1,2) are arranged in layers one around another.

3. A composite tube according to claim 1 or claim 2, in which a second of the materials (2) is a plastics material which is the same as that which contains the conductive filler.

4. A composite tube according to any one of the preceding claims, in which the plastics material containing the conductive filler is ethylene tetrafluoride resin.

5. A composite tube according to any one of the preceding claims, in which the conductive filler is carbon black.

1

2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 473 087  (W.L. SLADE)  <br> * Claims * | 1-5 | F 16 L  11/127 |
| X | FR-A-2 142 784  (P. VIENNOT S.A. AND TECALEMIT S.A.)  <br> * Page 1, first paragraph * | 1-4 | |

TECHNICAL FIELDS SEARCHED (Int. Cl.5)

F 16 L

The present search report has been drawn up for all claims

| Place of search | Date of completion of the search | Examiner |
|---|---|---|
| THE HAGUE | 08-06-1990 | BARTSCH A.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)